# EUROPÄISCHE PATENTSCHRIFT

(11) **EP 3 459 880 B1**
(45) Veröffentlichungstag und Bekanntmachung des Hinweises auf die Patenterteilung: **22.06.2022**
(21) Anmeldenummer: 17192063.0
(22) Anmeldetag: 20.09.2017
(51) Int. Cl.: B65G 1/137

(54) **GELENKARMROBOTERBASIERTES KOMMISSIONIERSYSTEM**
PICKING SYSTEM BASED ON A ROBOT WITH ARTICULATED ARM
SYSTÈME DE PRÉPARATION DES COMMANDES AU MOYEN D'UN BRAS ROBOTISÉ ARTICULÉ

(43) Veröffentlichungstag der Anmeldung: 27.03.2019
(73) Patentinhaber: Swisslog Evomatic GMBH, 4621 Sipbachzell (AT)
(72) Erfinder: GARSTENAUER, Michael, 4040 Linz (AT)
(74) Vertreter: Mader, Joachim

(56) Entgegenhaltungen:
- EP-A1- 2 923 971
- EP-A1- 3 112 295
- WO-A1-2014/166650
- WO-A1-2015/118171
- WO-A1-2016/196815
- WO-A2-2008/091733
- JP-A- H0 577 909
- JP-A- H06 115 632
- US-A1- 2011 238 207
- US-A1- 2016 236 865

## Beschreibung

### 1. Technisches Gebiet

Die vorliegende Erfindung betrifft ein Kommissioniersystem als auch ein Verfahren zur Kommissionierung von Artikeln aus Lagereinheiten eines Regallagers mittels eines solchen Kommissioniersystems.

### 2. Technischer Hintergrund

Die Kommissionierung von Artikeln, wie beispielsweise von Lagerteilen, kann die Entnahme von Artikeln aus einem Lager als auch das Einlagern der Artikel in ein Lager beschreiben. Bei der Entnahme von Artikeln können im Rahmen der Kommissionierung bestimmte Teilmengen der Artikel zusammengestellt werden, etwa um verschiedene Artikel in einem Paket zusammenzustellen und zu versenden.

Bei der Kommissionierung nach dem Ware-zur-Person Prinzip werden die Artikel zu einem statischen Kommissionierplatz transportiert. Hierzu wird ein entsprechender Artikelbehälter mit dem zu kommissionierenden Artikel aus dem Lager entnommen, zu einer Arbeitsstation bzw. dem statischen Kommissionierplatz transportiert, wo daraufhin ein Mitarbeiter die gewünschte Anzahl der Artikel aus dem Behälter entnehmen kann und sie zum Beispiel in einen entsprechenden separaten Auftragsbehälter ablegen kann. Anschließend wird der Artikelbehälter wieder an den Lagerort zurückgebracht.

Dieses Verfahren bringt jedoch mehrere Nachteile mit sich: Zunächst müssen die Artikelbehälter über lange Strecken vom Lagerbereich zur Arbeitsstation und wieder zurück transportiert werden. Hierfür werden entsprechende weitläufige Förderer benötigt. Des Weiteren muss, wenn mehrere Artikel benötigt werden, eine Synchronisation oder Pufferung der unterschiedlichen Transporte aller Artikelbehälter aus dem Lager zur Arbeitsstation erfolgen, oder nach der Kommissionierung einzelner Artikel eine Auftragskonsolidierung implementiert werden.

Es ist somit eine Aufgabe die der vorliegenden Erfindung zugrunde liegt, die oben genannten Nachteile zumindest teilweise zu überwinden. Dazu soll ein Kommissioniersystem bereitgestellt werden, welches den Transport der Artikelbehälter aus dem Lager zu einer Arbeitsstation minimiert. Des Weiteren soll mit der vorliegenden Erfindung das Problem der Synchronisation mehrerer Artikelentnahmen ohne zusätzliche Puffer oder nachgelagerte Konsolidierungsmaßnahmen behoben werden.

Aus der EP 1179 491 A1 ist ein Verfahren zur Kommissionierung von Waren aus einem Regallager bekannt, mit einer Mehrzahl von Lagergassen und einer Vorzone. Dabei wird jeweils ein Materialstrom von Lagereinheiten aus einem Regal einer Lagergasse in die Vorzone geführt, wobei in der Vorzone Waren aus den Lagereinheiten entnommen und/oder Waren in die Lagereinheiten des Materialstroms eingebracht werden und entsprechend veränderte Lagereinheiten in ein Regal der Lagergasse zurückgebracht werden.

EP 2923971 A1 offenbart ein Kommissioniersystem nach dem Oberbegriff des Anspruchs 1.

Es besteht jedoch weiterhin das Bedürfnis nach einem verbesserten Kommissioniersystem.

Die vorliegende Erfindung bietet eine Lösung gemäß dem Gegenstand der unabhängigen Ansprüche gelöst.

### 3. Inhalt der Erfindung

Die vorliegende Erfindung betrifft ein Kommissioniersystem nach Anspruch 1.

Das Kommissioniersystem eignet sich dabei insbesondere zur Kommissionierung von Artikeln, und kann beispielsweise in einem Lager eingesetzt werden. Das Kommissioniersystem umfasst dabei ein Regallager mit mehreren Regalen, die jeweils zur Aufnahme von Lagereinheiten eingerichtet sind. Die einzelnen Regale können vorzugsweise parallel zueinander angeordnet sein und entsprechende Regalfächer aufweisen zur Aufnahme der Lagereinheiten. Zwischen den Regalen ist dabei eine Regalgasse angeordnet, von welcher aus auf die Lagereinheiten im Regal zugegriffen werden kann. Dabei kann die Regalgasse durch den zwischen zwei benachbarten Regalen begrenzten Raum definiert werden.

Die Lagereinheiten können wiederrum zur Aufnahme eines oder mehrerer Artikel eingerichtet sein. Die Artikel können dabei in, an oder auf den Lagereinheiten bereitgestellt werden. Vorzugsweise sind die Lagereinheiten als Artikelbehälter ausgestaltet. Die Lagereinheiten können mit einem oder mehreren Artikeln befüllt werden. Beispielsweise können in den Lagereinheiten Kleinteile oder auch größere Teile gelagert werden, wie etwa Schachteln, Flaschen, oder Einzelteile. Vorzugsweise sind in jeder Lagereinheit mehrere Artikel einer bestimmten Art gelagert.

Das Kommissioniersystem umfasst ferner zumindest ein Fördersystem, welches in der zwischen den Regalen angeordneten Regalgasse eingerichtet ist. Jedem Fördersystem ist dabei zumindest eine Kommissionierzone zugeordnet. Die Kommissionierzone kann dabei ein dreidimensionaler Raum sein, in welchem die Kommissionierung gemäß der Erfindung erfolgen kann. Vorzugsweise sind die Kommissionierzonen an den Stirnseiten der Regale angeordnet. Jedes Fördersystem ist dabei eingerichtet zum Befördern von Lagereinheiten von einem angrenzendem Regal entlang der Regalgasse zu der jeweiligen Kommissionierzone und zurück. Das Fördersystem kann dabei vorzugsweise eine Lagereinheit aus einem Fach eines Regals entnehmen, und zu der Kommissionierzone befördern und dort an eine entsprechende Entnahmeposition übergeben. Zu einem späteren Zeitpunkt kann das Fördersystem diese Lagereinheit von der Entnahmeposition aufnehmen und zurück zu seinem ursprünglichen Stellplatz im Regal befördern. Vorzugsweise kann das Fördersystem Lagereinheiten aus beiden angrenzenden Regalen, welche die Regalgasse definieren, entnehmen, und zur Kommissionierzone und zurück befördern.

Ferner umfasst das Kommissioniersystem ein Transportsystem, welches eingerichtet ist zum Transportieren von Transporteinheiten zu und von jeder der Kommissionierzonen. Das Transportsystem ist dabei vorzugsweise separat zu und unabhängig von dem Fördersystem bereitgestellt. Die Transporteinheiten können dabei ähnlich wie die Lagereinheiten als Behälter ausgestaltet sein und zur Aufnahme eines oder mehrerer Artikel einer oder verschiedener Art eingerichtet sein. Beispielsweise kann die Transporteinheit als Auftragsbehälter ausgestaltet sein. Das Fördersystem und das Transportsystem sind dabei vorzugsweise derart unabhängig voneinander, so dass eine Transporteinheit von dem Transportsystem vorzugsweise nicht direkt zum Fördersystem übergeben werden kann und ebenso auch eine Lagereinheit vorzugsweise nicht direkt von dem Fördersystem zum Transportsystem übergeben werden kann. Das Transportsystem und das Fördersystem bilden somit vorzugsweise zueinander geschlossene Systeme.

Ferner umfasst das Kommissioniersystem zumindest einen Manipulator, welcher eingerichtet ist zum Entnehmen eines Artikels aus der Lagereinheit in einer der Kommissionierzonen und zum Übergeben des Artikels in eine Transporteinheit in derselben Kommissionierzone. Vorzugsweise ist in jeder Kommissionierzone ein solcher Manipulator bereitgestellt. Vorzugsweise ist an jeder Stirnseite der Regale zumindest ein solcher Manipulator bereitgestellt. Einer Lagereinheit, welche sich in der Kommissionierzone befindet, kann somit mittels des Manipulators ein Artikel entnommen werden, und daraufhin unmittelbar in eine entsprechend bereitgestellte Transporteinheit übergeben werden, welche sich hierzu in derselben Kommissionierzone befindet. Die Lagereinheit kann dabei über das Fördersystem zu dieser Kommissionierzone befördert und von dieser entfernt werden, und die Transporteinheit kann mittels des Transportsystems zu und von dieser Kommissionierzone transportiert werden. Der in dieser Kommissionierzone arbeitende Manipulator ist dabei ferner eingerichtet um Artikel aus Lagereinheiten in verschiedenen vertikalen Positionen in der Kommissionierzone zu entnehmen. Er kann somit auch Lagereinheiten erreichen, die in höhergelegenen Entnahmepositionen in der Kommissionierzone sind.

Die Kommissionierzone kann dabei zumindest den dreidimensionalen Raum beschreiben, in welchem der Manipulator Lagereinheiten und Transporteinheiten erreichen kann, um die Kommissionierung durchzuführen. Die Begriffe "Befördern" und "Transportieren" haben dabei keine unterschiedliche Bedeutung, sondern können jeweils das aktive Bewegen einer Lager- oder Transporteinheit beschreiben.

Mit dem erfindungsgemäßen Kommissioniersystem kann somit eine vollautomatisierte Kommissionierung eines Artikels vorteilhafterweise bereits am Regal erfolgen, nämlich mittels des Manipulators. Es ist nicht notwendig, die Lagereinheit über weite Strecken zu einem statischen Kommissionierplatz zu transportieren, da die Kommissionierung direkt an der Schnittstelle zwischen dem am Regal befindlichen Fördersystem und dem davon unabhängigen Transportsystem erfolgt. Das Fördersystem entnimmt die entsprechende Lagereinheit dem Regal, transportiert sie lediglich entlang des Regals zu dem Manipulator und der Manipulator entnimmt zumindest einen Artikel der Lagereinheit und übergibt diesen der entsprechenden Transporteinheit. Daraufhin kann die Lagereinheit unmittelbar zurück zum entsprechenden Regalfach befördert werden. Die Transporteinheit kann mittels des Transportsystems anschließend zu weiteren Kommissionierzonen transportiert werden und mit weiteren Artikeln beladen werden. Somit muss lediglich die Transporteinheit bzw. der Auftragsbehälter über relativ weite Strecken durch die Lagerhalle bewegt werden, nicht jedoch eine Vielzahl von Lagereinheiten bzw. Artikelbehältern. Zusätzliche Puffer oder nachgelagerte Konsolidierungsmaßnahmen sind nicht erforderlich. Da der Manipulator auf Lagereinheiten in verschiedenen vertikalen Positionen in der Kommissionierzone zugreifen kann, ist das Kommissioniersystem optimal in einem Hochregallager einsetzbar. Dadurch kann effizient eine Kommissionierung unterschiedlicher Artikel erfolgen, die jeweils in verschiedenen Lagereinheiten in dem Hochregallager gelagert sind. Ein aufwendiges vertikales Befördern der Lagereinheiten ist vorteilhafterweise nicht notwendig, da der Manipulator selbst die auf verschiedenen vertikalen Positionen bereitgestellten Lagereinheiten in der Kommissionierzone erreichen kann.

Vorzugsweise ist der Manipulator als mehrachsiger Gelenkarmroboter ausgestaltet. Manipulatoren, und insbesondere Roboter, sind universell einsetzbare Handhabungsvorrichtungen, welche in einem oder mehreren Freiheitsgraden frei programmiert werden können. Durch entsprechende Ansteuerung der jeweiligen Achsen kann die Konfiguration des Manipulators verändert werden, um einen Endeffektor zu verschiedenen Positionen im Raum zu bewegen. Vorzugsweise führt der Manipulator als Endeffektor einen Greifer, mittels welchem der Manipulator einen Artikel aus der Lagereinheit entnehmen kann und in eine Transporteinheit übergeben kann. Der Greifer kann dabei beispielsweise mechanisch den Artikel durch Kraftschluss greifen, oder mittels Saug- oder Magnetkraft das Entnehmen und Übergeben ermöglichen. Diese Aufzählung ist nur beispielhaft und nicht abschließend.

Vorzugsweise ist der Manipulator beweglich entlang einer vertikalen Achse eingerichtet. Somit kann der Manipulator vorzugsweise vertikal bewegt werden. Dabei kann der Manipulator mit einer vertikalen Bewegungskomponente entlang der Höhe eines Regals bewegt werden. Vorzugsweise umfasst das System eine Linearachse, die zum Bewegen des Manipulators entlang der vertikalen Achse eingerichtet ist. Die vertikale Achse erstreckt sich dabei vorzugsweise entlang der Regalhöhe. Die Linearachse muss dabei nicht rein vertikal ausgerichtet sein, muss jedoch eine Bewegung mit einer vertikalen Komponente erlauben. Somit kann auch bei einem Regal mit mehreren Ebenen bzw. Fächerebenen mittels eines Manipulators effizient auf Lagereinheiten in diesen Ebenen zugegriffen werden. Wenn beispielsweise ein mehrstufig ausgebildetes Fördersystem eingesetzt wird, kann mittels des Manipulators auf die zu der Kommissionierzone transportierten Lagereinheiten direkt in den verschiedenen Ebenen zugegriffen werden. Auch kann der Manipulator durch das vertikale Bewegen, etwa über die vertikale Achse, leicht auf Lagereinheiten zugreifen, die auf verschiedenen vertikalen Positionen in der Kommissionierzone vorliegen.

Vorzugsweise ist die Transporteinheit in der Kommissionierzone vertikal verfahrbar, und insbesondere vorzugsweise zusammen mit dem Manipulator. Damit kann auch die Transporteinheit zu einer optimalen vertikalen Position bewegt werden, um dann mittels des Manipulators beladen zu werden. Vorzugsweise kann die Transporteinheit in eine stationäre Parkposition in der Kommissionierzone positioniert werden, und in dieser durch den Manipulator befüllt werden.

Insbesondere vorzugsweise umfasst das System einen Schlitten, an welchem der Manipulator befestigt ist, und wobei der Schlitten eingerichtet ist, eine Transporteinheit temporär zu halten. Der Schlitten kann dabei vertikal verfahren, und somit den Manipulator vertikal bewegen. Die Transporteinheit kann dabei beispielsweise mittels eines Klickmechanismus oder mittels eines Hakens an dem Schlitten befestigt werden, und zusammen mit dem Manipulator vertikal bewegt werden. Alternativ oder zusätzlich kann der Schlitten auch eine entsprechende Aussparung oder auch einen Tisch bzw. eine Plattform umfassen, auf welchem die Transporteinheit zum vertikalen Verfahren abgelegt werden kann. Dabei ist die durch den Schlitten mitbewegte Transporteinheit vorzugsweise in Reichweite des Manipulators, sodass der Manipulator Artikel in die mitbewegte Transporteinheit übergeben kann. Somit kann eine Transporteinheit zusammen mit dem Manipulator zu einer Lagereinheit in einer erhöhten Position bewegt werden, und nachdem der Manipulator einen Artikel aus der Lagereinheit entnommen hat, kann der Artikel auf dem Rückweg nach unten zum Transportsystem bereits während der Fahrt in die mitbewegte Transporteinheit übergeben werden. Ferner ermöglicht diese Ausgestaltung auch ein effizientes Beladen einer Transporteinheit mit mehreren Artikeln von einer oder von mehreren Lagereinheiten in einer einzelnen Kommissionierzone, da der Manipulator zur Übergabe eines Artikels nicht zur Transporteinheit verfahren muss. Diese wird mitbewegt und bleibt somit vorteilhafterweise in Reichweite des Manipulators.

Die Regale umfassen mehrere Ebenen, wobei das Fördersystem eingerichtet ist zum horizontalen Befördern von Lagereinheiten entlang der Ebenen. Vorzugsweise ist in der bzw. in jeder Kommissionierzone auf jeder der Ebenen eine Entnahmeposition vorgesehen, in welche die Lagereinheiten mittels des Fördersystems gebracht werden können. Die Entnahmepositionen sind dabei eingerichtet zur Aufnahme einer Lagereinheit, und das Fördersystem ist eingerichtet zur Positionierung einer Lagereinheit in einer der Entnahmepositionen. Der vorzugsweise vertikal bewegbare Manipulator kann dabei auf jede dieser Entnahmepositionen auf den mehreren Ebenen zugreifen. Somit können vorteilhafterweise mittels des Fördersystems in allen Ebenen eines Regals gleichzeitig einzelne Lagereinheiten dem Regal entnommen werden und in der Kommissionierzone auf entsprechenden Entnahmepositionen zur Kommissionierung bereitgestellt werden. Dadurch kann der Manipulator effizient laufend mit Lagereinheiten beliefert werden, wodurch Wartezeiten minimiert werden und somit die Geschwindigkeit der Kommissionierung erhöht wird.

Das Fördersystem umfasst mehrere Fördervorrichtungen mit insbesondere vorzugsweise jeweils einem Förderband. Vorzugsweise umfasst das Fördersystem ein oder mehrere Förderschlitten. Diese können vorzugsweise die Lagereinheiten aufnehmen und bewegen. Die Förderschlitten können dabei mittels eines Förderbandes, eines Förderantriebs oder mittels Eigenantrieb bewegt werden. Vorzugsweise ist je eine Fördervorrichtung in jeder Ebene der Regale abgeordnet, und die Fördervorrichtungen sind vorzugsweise unabhängig voneinander zum horizontalen Befördern von Lagereinheiten entlang der jeweiligen Ebenen eingerichtet. Somit kann beispielsweise in einer Ebene eine Lagereinheit zur Kommissionierzone transportiert werden, während auf einer anderen Ebene eine Lagereinheit von der Kommissionierzone zurück zum Lagerplatz im Regal befördert werden kann. Dies erhöht die Flexibilität und Geschwindigkeit der Kommissionierung, da mehrere Lagereinheiten unabhängig voneinander dem Manipulator zur Kommissionierung zugeführt werden können.

Vorzugsweise sind jeweils zwei Fördersysteme von benachbarten Regalgassen einer gemeinsamen Kommissionierzone zugeordnet. Dadurch kann einem Manipulator in der Kommissionierzone eine große Anzahl von Lagereinheiten zur Kommissionierung bereitgestellt werden, sodass die Ausnutzung des Manipulators erhöht wird. Vorzugsweise sind jedem Fördersystem zwei Kommissionierzonen mit je zumindest einem Manipulator zugeordnet, die benachbart an den Stirnseiten von benachbarten Regalen angeordnet sein können. Das Fördersystem kann somit vorteilhafter Weise Entnahmepositionen dieser beiden Kommissionierzonen bedienen, wodurch die Flexibilität und Effizienz des Systems weiter gesteigert wird.

Vorzugsweise umfasst das Transportsystem eine Transportvorrichtung mit vorzugsweise einem Transportband, wobei die Transportvorrichtung vorzugsweise mehrere Kommissionierzonen verbindet. Das Transportsystem kann dabei einen Gurtförderer und/oder einen Rollenförderer umfassen. Vorzugsweise ist das Transportsystem dabei eingerichtet zum Ausschleusen einer Transporteinheit in die Kommissionierzonen, sodass die ausgeschleuste Transporteinheit in der Kommissionierzone mit Artikeln beladen werden kann, ohne den Fluss des Transportsystems zu stören. Eine ausgeschleuste Transporteinheit kann in einer Aufnahmeposition verbleiben und beladen werden, ohne dass das Transportsystem selbst stillstehen muss. Anschließend kann die Transporteinheit von der Kommissionierzone wieder in das Transportsystem eingeschleust werden, um z.B. zu einer weiteren Kommissionierzone transportiert zu werden. Das Transportsystem bzw. das Transportband kann dabei beispielsweise entlang der Stirnseiten der Regale verlaufen, mit einer Haupttransportrichtung, die rechtwinklig zu einer Haupttransportrichtung des Fördersystems ist. Dies ermöglicht einen platzsparenden Aufbau.

Die vorliegende Erfindung betrifft weiterhin die Verwendung eines oben beschriebenen Kommissioniersystems zur Kommissionierung. Ferner betrifft die Erfindung ein Verfahren zur Kommissionierung von Artikeln aus Lagereinheiten eines Regallagers mittels eines oben beschriebenen Kommissioniersystems. Das Verfahren umfasst dabei die folgenden Schritte:
Befördern, mittels des Fördersystems, einer Lagereinheit von einem der Regale zu einer jeweiligen Kommissionierzone; Transportieren, mittels des Transportsystems, einer Transporteinheit zu der Kommissionierzone; Entnehmen, mittels des Manipulators, eines Artikels aus der Lagereinheit; und Übergeben, mittels des Manipulators des entnommenen Artikels in die Transporteinheit.

Das Verfahren muss dabei nicht zwangsläufig in dieser Reihenfolge ablaufen. Die Artikelentnahme kann mittels des Manipulators beispielsweise bereits erfolgen, bevor die Transporteinheit zur Kommissionierzone transportiert wurde. Vorzugsweise erfolgt die Beförderung der Lagereinheiten zu der Kommissionierzone derart, dass es zu keinen Wartezeiten kommt, und der Manipulator unmittelbar mit der Entnahme des Artikels beginnen kann. Der Prozess kann für mehrere Aufträge gleichzeitig erfolgen, so dass ein hoher Durchsatz bei gleichzeitig guter zeitlicher Entkopplung zwischen Lagereinheit-Beförderung und Transporteinheit-Transport erfolgt.

Vorzugsweise ist das Befördern der Lagereinheiten mittels des Fördersystems ein horizontales Befördern, und das Verfahren weist vorzugsweise weiterhin auf, vor und/oder nach dem Entnehmen des Artikels, ein vertikales Bewegen des Manipulators, wobei das vertikale Bewegen des Manipulators insbesondere vorzugsweise zusammen mit einem vertikalen Bewegen der Transporteinheit in der Kommissionierzone erfolgt. Insbesondere vorzugsweise kann das Übergeben des Artikels in die Transporteinheit während des vertikalen Bewegens des Manipulators erfolgen.

Vorzugsweise erfolgt das Entnehmen des Artikels vor Abschluss des Transportierens der Transporteinheit zu der entsprechenden Kommissionierzone. Dies erhöht die Geschwindigkeit, da Wartezeiten vermieden werden.

Vorzugsweise beträgt die Zeitspanne zwischen dem Abschluss des Transportierens der Transporteinheit zu der Kommissionierzone und dem Beginn des Übergebens des Artikels in die Transporteinheit weniger als 2 Sekunden, vorzugsweise weniger als 1 Sekunde, weiter vorzugsweise weniger als 0,5 Sekunden, und am meisten bevorzugt weniger als 0,2 Sekunden. Folglich erfolgt eine Koordination der Bewegung der einzelnen Elemente, sodass keine bzw. nur geringe Wartezeiten für die Transporteinheiten in der Kommissionierzone entstehen. Eine Pufferung der Transporteinheiten wird dadurch vorteilhafterweise vermieden.

Das erfindungsgemäße Kommissioniersystem ist vorzugsweise mit einer entsprechenden Steuerung ausgestattet, welche zentral oder dezentral implementiert sein kann und vorzugsweise die Kommissionierung bzw. das oben beschriebene Verfahren steuert. Die Steuerung kann dabei mit einer Datenbank verbunden oder verknüpft sein, in welcher die Lagerplätze der einzelnen Lagereinheiten hinterlegt sind. Die Erfindung umfasst dabei auch ein Computerprogramm mit Instruktionen zum Durchführen der oben genannten Funktionen und Verfahrensschritte, wenn auf einem entsprechenden Computer ausgeführt.

### 4. Beschreibung und bevorzugte Ausführungsbeispiele

Im Folgenden wird die vorliegende Erfindung unter Bezugnahme auf die beiliegenden Figuren näher beschrieben. Dabei sind gleiche Elemente mit gleichen Bezugszeichen gekennzeichnet. Es zeigt:
Figur 1: Ein Kommissioniersystem gemäß einer Ausführungsform der vorliegenden Erfindung;
Figur 2: Einen Teilaspekt des Kommissioniersystems der Figur 1; und
Figur 3: Einen Aspekt eines Kommissioniersystems gemäß einer weiteren Ausführungsform.

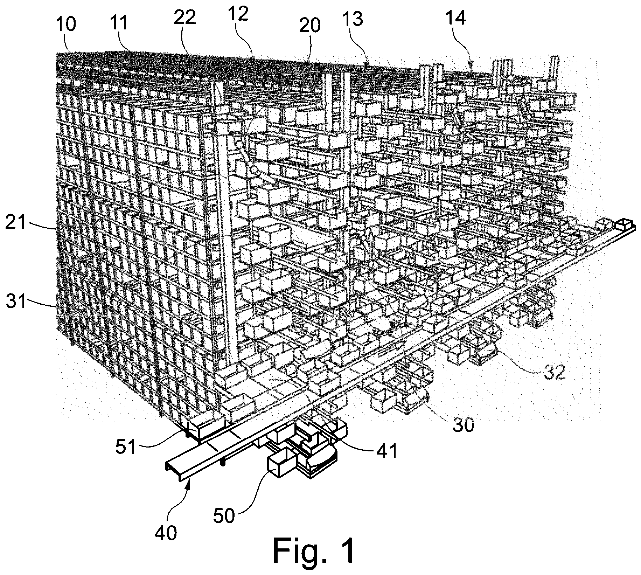

In der Figur 1 ist ein Kommissioniersystem gezeigt, welches ein Regallager mit mehreren Regalen 10, 11, 12, 13, 14 umfasst. Das vorderste Regal 10 und hinterste Regal 14 sind dabei als Schnittdarstellung wiedergegeben. Jedes Regal 10, 11, 12, 13, 14 weist dabei 18 Ebenen auf, in welchen Artikelbehälter oder Lagereinheiten 50 aufgenommen werden können. Auf die Regale 10, 11, 12, 13, 14 kann beidseitig zugegriffen werden, wobei mehrere Lagereinheiten 50 hintereinander in einem Regalplatz angeordnet sind.

Die Regale 10, 11, 12, 13, 14 sind parallel zueinander angeordnet, und definieren jeweils eine Regalgasse zwischen sich.

In den Regalgassen sind Fördersysteme 30 bereitgestellt, mit Fördervorrichtungen auf jeder Regalebene. Mittels der Fördervorrichtungen können die Lagereinheiten 50 aus den Regalen 10, 11, 12, 13, 14 entnommen werden und zu den jeweiligen Stirnseiten der Regale 10, 11, 12, 13, 14 bzw. zur Stirnseite des Regallagers transportiert werden. Hier können die Lagereinheiten 50 in Entnahmepositionen 31 abgelegt werden, die auf jeder Regalebene beidseitig der Fördervorrichtungen 30 vorliegen.

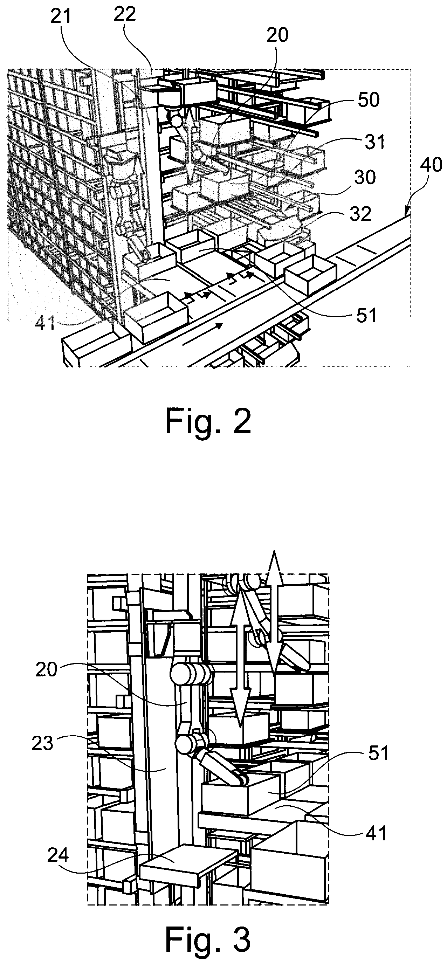

In der Figur 2 ist ein näherer Ausschnitt von dem Kommissioniersystem der Figur 1 gezeigt. Wie insbesondere in Figur 2 ersichtlich, umfasst das Fördersystem Förderschlitten 32, welche auf jeder Regalebene horizontal verfahrbar sind. Der Förderschlitten 32 ermöglicht dabei das Befördern einzelner Lagereinheiten 50 entlang einer Regalebene. Die Schlitten sind zum beidseitigen Be- und Entladen eingerichtet, sodass sie Lagereinheiten 50 von beiden angrenzenden Regalen aufnehmen können, und auch zwei Entnahmepositionen bedienen können.

Ferner ist ein Transportsystem 40 gezeigt, mittels welchem Transporteinheiten 51 entlang der Stirnseite des Regallagers transportiert werden können. Das Transportsystem erlaubt ein Ausschleusen einzelner Transporteinheiten 51 zu entsprechenden Aufnahmepositionen 41, in welchen die Transporteinheiten einen oder mehrere Artikel empfangen können.

An den Stirnseiten der Regale 10, 11, 12, 13, 14 sind in der gezeigten Ausführungsform jeweils zwei Manipulatoren 20 bereitgestellt. Für die Regale 10 und 14 ist aufgrund der Schnittdarstellung jeweils nur ein Manipulator 20 in der Figur 1 dargestellt. Die Manipulatoren 20 sind vertikal mittels eines Schlittens 22 auf einer vertikalen Achse 21 beweglich angeordnet, so dass sie über die gesamte Regalhöhe verfahrbar sind. Ein Manipulator 20 kann somit beispielsweise nach oben verfahren und aus einer Lagereinheit 50 in einer höheren Entnahmeposition 31 einen Artikel entnehmen. Anschließend kann der Manipulator 30 nach unten verfahren, um den entnommenen Artikel in eine bereitgestellte Transporteinheit 51 zu übergeben. Ein aufwendiger vertikaler Transport der Lagereinheiten 51 ist nicht erforderlich.

Die Kommissionierzone kann dabei als ein dreidimensionaler Raum verstanden werden, der die Vielzahl der Entnahmepositionen 31 und Aufnahmepositionen 41 umfasst, die ein Manipulator 30 oder ein Manipulatorpaar an der Stirnseite eines Regals 10, 11, 12, 13, 14 erreichen kann, auch unter Einsatz der vertikalen Achse 21, um erfindungsgemäß Artikel zu entnehmen und zu übergeben.

In der Figur 3 ist eine weitere Ausgestaltung eines Kommissioniersystems gezeigt, welches beispielsweise in dem Kommissioniersystem der Figur 1 implementiert sein kann. Insbesondere wird hier ein größer ausgestalteter Schlitten 23 eingesetzt, mittels welchem der Manipulator 20 vertikal bewegt werden kann. Am unteren Ende des Schlittens 23 ist eine Plattform oder ein Tisch 24 bereitgestellt, welcher eine Transporteinheit 51 empfangen kann. Hierzu kann die Transporteinheit 51 von der entsprechenden Aufnahmeposition 41 auf den Tisch 24 bewegt werden. Wenn der Manipulator 20 mitsamt Schlitten 23 nach oben verfahren wird, wird ebenso die auf dem Tisch 24 befindliche Transporteinheit 51 nach oben verfahren. Wenn in einem Regal mehrere Artikel in die Transporteinheit 51 übergeben werden sollen, kann dies vorzugsweise direkt nach Entnahme des Artikels aus der entsprechenden Lagereinheit 50 erfolgen, ohne dass der Manipulator 20 mehrfach zur Übergabe des Artikels in eine Transporteinheit nach unten verfahren muss. Eine Transporteinheit 51 kann vorteilhafterweise mittels des Tisches 24 in die Nähe der Entnahmeposition 31 gebracht werden. Dies ist insbesondere bei Aufträgen mit mehreren Kommissioniervorgängen vom selben Artikel vorteilhaft.

Die in den Figuren 1-3 dargestellten Ausführungsformen weisen sich dadurch aus, dass in jeder Lagerebene Entnahmepositionen vorgesehen sind, auf welche mittels des Fördersystems die Lagereinheiten gestellt werden können, so dass aus den Lagereinheiten in jeder Lagerebene Artikel entnommen werden können. Dieser Prozess kann gleichzeitig in allen Ebenen des Regals stattfinden. Pro Ebene sind dabei zwei Entnahmepositionen beidseitig des Fördersystems bereitgestellt. Somit können mittels eines Fördersystems zwei Manipulatoren benachbarter Regale bedient werden. Dadurch stehen an einem oder mehreren Kommissionierzonen gleichzeitig eine große Zahl von Lagereinheiten zur Artikelentnahme durch den Manipulator zur Verfügung. Die Entnahme erfolgt in den dargestellten Ausführungsformen durch einen auf einer vertikalen Achse angebrachten Gelenkarmroboter, der auf alle Regalebenen Zugriff hat. In den Arbeitsbereichen der Roboter sind auch ein oder mehrere Übergabebereiche oder Aufnahmepositionen angeordnet, in welche die Transporteinheiten zum Empfang der Artikel transportiert werden. Diese sind in den dargestellten Ausführungsformen direkt an das Transportsystem angeschlossen, um die Übergabebereiche oder Aufnahmepositionen mit zu beladenen Transporteinheiten zu versorgen und fertig befüllte Transporteinheiten abzutransportieren.

Vorzugsweise ist das Kommissioniersystem in einem Lagersystem implementiert. Dabei werden vorteilhafter Weise mehrere der Regale nebeneinander angeordnet, und mittels des Transportsystems können die Transporteinheiten nacheinander an die entsprechenden Regale herantransportiert werden. Der Fachmann versteht allerdings, das erfindungsgemäße Kommissioniersystem bzw. Verfahren auch in anderen Lagersystemen einzusetzen bzw. zu implementieren.

### Bezugszeichenliste:

10, 11, 12, 13, 14 Regal
20 Manipulator
21 vertikale Achse
22, 23 Schlitten
24 Tisch
30 Fördersystem
31 Entnahmeposition
32 Förderschlitten
40 Transportsystem
41 Aufnahmeposition
50 Lagereinheit
51 Transporteinheit

## Patentansprüche

1. Kommissioniersystem, aufweisend:
ein Regallager mit mehreren Regalen (10, 11, 12, 13, 14), jeweils eingerichtet zur Aufnahme von Lagereinheiten (50), wobei die Regale (10, 11, 12, 13, 14) mehrere vertikale Ebenen umfassen;
zumindest ein Fördersystem (30) welches in einer zwischen den Regalen (10, 11, 12, 13, 14) angeordneten Regalgasse eingerichtet ist, **dadurch gekennzeichnet, dass** jedem Fördersystem (30) zumindest eine Kommissionierzone zugeordnet ist und wobei jedes Fördersystem (30) eingerichtet ist zum Befördern von Lagereinheiten (50) von einem angrenzenden Regal (10, 11, 12, 13, 14) entlang der Regalgasse zu der jeweiligen Kommissionierzone und zurück, wobei das Fördersystem (30) eingerichtet ist zum horizontalen Befördern von Lagereinheiten (50) entlang der Ebenen, wobei das Fördersystem (30) mehrere Fördervorrichtungen umfasst, wobei je eine Fördervorrichtung in jeder Ebene angeordnet ist und wobei die Fördervorrichtungen unabhängig voneinander zum horizontalen Befördern von Lagereinheiten (50) entlang der jeweiligen Ebenen zu der jeweiligen Kommissionierzone eingerichtet sind;
ein Transportsystem (40), eingerichtet zum Transportieren von Transporteinheiten (51) zu und von jeder der Kommissionierzonen; und
zumindest ein Manipulator (20), vorzugsweise ein mehrachsiger Gelenkarmroboter, wobei der Manipulator (20) eingerichtet ist zum Entnehmen eines Artikels aus der Lagereinheit (50) in einer der Kommissionierzonen und zum Übergeben des Artikels in eine Transporteinheit (51) in derselben Kommissionierzone, wobei der Manipulator (20) eingerichtet ist um Artikel aus Lagereinheiten (50) in verschiedenen vertikalen Positionen in der Kommissionierzone zu entnehmen.

2. System nach Anspruch 1, wobei der Manipulator (20) beweglich entlang einer vertikalen Achse (21) eingerichtet ist, wobei das System vorzugsweise eine Linearachse umfasst, die zum Bewegen des Manipulators (20) entlang der vertikalen Achse (21) eingerichtet ist.

3. System nach Anspruch 2, wobei sich die vertikale Achse (21) entlang der Regalhöhe erstreckt.

4. System nach Anspruch 2 oder 3, weiter aufweisend einen Schlitten (22, 23), an welchem der Manipulator (20) befestigt ist, wobei der Schlitten (22, 23) eingerichtet ist, eine Transporteinheit (51) temporär zu halten.

5. System nach einem der Ansprüche 1 bis 4, wobei die Transporteinheit (51) in der Kommissionierzone vertikal verfahrbar ist, vorzugsweise zusammen mit dem Manipulator (20).

6. System nach einem der Ansprüche 1 bis 5, wobei jede Fördervorrichtungen jeweils ein Förderband umfasst.

7. System nach einem der Ansprüche 1 bis 6, wobei auf jeder Ebene eine Entnahmeposition (31) in der Kommissionierzone vorgesehen ist, eingerichtet zur Aufnahme einer Lagereinheit (50), wobei das Fördersystem eingerichtet ist zur Positionierung einer Lagereinheit (50) in einer der Entnahmepositionen (31).

8. System nach einem der Ansprüche 1 bis 7, wobei die Kommissionierzonen an den Stirnseiten der Regale (10, 11, 12, 13, 14) angeordnet sind.

9. System nach einem der Ansprüche 1 bis 8, wobei an jeder Stirnseite der Regale (10, 11, 12, 13, 14) zumindest ein Manipulator (20) bereitgestellt ist, und/oder wobei jeder Kommissionierzone zumindest ein Manipulator (20) zugeordnet ist.

10. System nach einem der Ansprüche 1 bis 9, wobei jeweils zwei Fördersysteme (30) von benachbarten Regalgassen einer gemeinsamen Kommissionierzone zugeordnet sind.

11. System nach einem der Ansprüche 1 bis 10, wobei das Transportsystem (40) eine Transportvorrichtung mit vorzugsweise einem Transportband umfasst, wobei die Transportvorrichtung mehrere Kommissionierzonen verbindet, und wobei das Transportsystem (40) vorzugsweise eingerichtet ist zum Ausschleusen einer Transporteinheit (51) in die Kommissionierzonen.

12. Verfahren zur Kommissionierung von Artikeln aus Lagereinheiten (50) eines Regallagers mittels eines Kommissioniersystems gemäß einem der Ansprüche 1 bis 11, aufweisend die folgenden Schritte:
Befördern, mittels des Fördersystems (30), einer Lagereinheit (50) von einem der Regale (10, 11, 12, 13, 14) zu einer jeweiligen Kommissionierzone;
Transportieren, mittels des Transportsystems (40), einer Transporteinheit (51) zu der Kommissionierzone;
Entnehmen, mittels des Manipulators (20), eines Artikels aus der Lagereinheit (50);
Übergeben, mittels des Manipulators (20), des entnommenen Artikels in die Transporteinheit (51).

13. Verfahren nach Anspruch 12 in Kombination mit Anspruch 2, wobei das Befördern der Lagereinheit (50) mittels des Fördersystems (30) ein horizontales Befördern ist, und wobei das Verfahren weiterhin aufweist, vor und/oder nach dem Entnehmen des Artikels:
vertikales Bewegen des Manipulators (20), wobei das vertikale Bewegen des Manipulators (20) vorzugsweise zusammen mit einem vertikalen Bewegen der Transporteinheit (51) in der Kommissionierzone erfolgt,
wobei das Übergeben des Artikels in die Transporteinheit (50) vorzugsweise während des vertikalen Bewegens des Manipulators (20) erfolgt.

14. Verfahren nach Anspruch 12 oder 13, wobei das Entnehmen des Artikels erfolgt vor Abschluss des Transportierens der Transporteinheit (51) zu der entsprechenden Kommissionierzone.

15. Verfahren nach einem der Ansprüche 12 bis 14, wobei die Zeitspanne zwischen dem Transportieren und dem Übergeben geringer ist als 2 Sekunden, vorzugsweise geringer als 1 Sekunde, weiter vorzugsweise geringer als 0,5 Sekunden, und am meisten bevorzugt geringer als 0,2 Sekunden.

## Claims

1. A picking system having:
a rack warehouse having a plurality of racks (10, 11, 12, 13, 14), each configured to receive storage units (50), the racks (10, 11, 12, 13, 14) comprising a plurality of vertical planes;
at least one conveyor system (30) which is configured in a rack aisle arranged between the racks (10, 11, 12, 13, 14), **characterised in that** each conveyor system (30) is associated with at least one picking zone and wherein each conveyor system (30) is configured to convey storage units (50) from an adjacent rack (10, 11, 12, 13, 14) along the rack aisle to the respective picking zone and back, wherein the conveyor system (30) is configured to convey storage units (50) horizontally along the planes, wherein the conveyor system (30) comprises a plurality of conveying devices, wherein each conveying device is arranged in each plane and wherein the conveying devices are configured independently of one another to convey storage units (50) horizontally along the respective planes to the respective picking zone;
a transport system (40) configured to transport transport units (51) to and from each of the picking zones; and
at least one manipulator (20), preferably a multi-axis articulated arm robot, the manipulator (20) being configured to remove an article from the storage unit (50) in one of the picking zones and to transfer the article into a transport unit (51) in the same picking zone, the manipulator (20) being configured to remove articles from storage units (50) in different vertical positions in the picking zone.

2. The system according to claim 1, wherein the manipulator (20) is movably configured along a vertical axis (21), the system preferably comprising a linear axis configured to move the manipulator (20) along the vertical axis (21).

3. The system according to claim 2, wherein the vertical axis (21) extends along the rack height.

4. The system according to claim 2 or 3, further comprising a carriage (22, 23) to which the manipulator (20) is attached, the carriage (22, 23) being configured to temporarily hold a transport unit (51).

5. The system according to any one of claims 1 to 4, wherein the transport unit (51) is vertically displaceable in the picking zone, preferably together with the manipulator (20).

6. The system according to any one of claims 1 to 5, wherein each conveying device respectively comprises a conveyor belt.

7. The system according to any one of claims 1 to 6, wherein a removal position (31) is provided in the picking zone on each plane, configured to receive a storage unit (50), wherein the conveying system is configured to position a storage unit (50) in one of the removal positions (31).

8. The system according to any one of claims 1 to 7, wherein the picking zones are arranged at the end faces of the racks (10, 11, 12, 13, 14).

9. The system according to any one of claims 1 to 8, wherein at least one manipulator (20) is provided at each end face of the racks (10, 11, 12, 13, 14), and/or wherein at least one manipulator (20) is assigned to each picking zone.

10. The system according to any one of claims 1 to 9, wherein two conveying systems (30) of adjacent rack aisles are each assigned to a common picking zone.

11. The system according to any one of claims 1 to 10, wherein the transport system (40) comprises a transport device having preferably a transport belt, wherein the transport device connects a plurality of picking zones, and wherein the transport system (40) is preferably configured to discharge a transport unit (51) into the picking zones.

12. A method for picking articles from storage units (50) of a rack warehouse by means of a picking system according to any one of claims 1 to 11, having the following steps:
conveying, by means of the conveyor system (30), a storage unit (50) from one of the racks (10, 11, 12, 13, 14) to a respective picking zone;
transporting, by means of the transport system (40), a transport unit (51) to the picking zone;
removing, by means of the manipulator (20), an article from the storage unit (50);
transferring, by means of the manipulator (20), the removed article into the transport unit (51).

13. The method according to claim 12 in combination with claim 2, wherein conveying the storage unit (50) by means of the conveyor system (30) is a horizontal conveying, and wherein the method further comprises, before and/or after removing the article:
vertically moving the manipulator (20), the vertical moving of the manipulator (20) preferably being performed together with a vertical moving of the transport unit (51) in the picking zone,
the transferring of the article into the transport unit (50) preferably being performed during the vertical moving of the manipulator (20).

14. The method according to claim 12 or 13, wherein the removing of the article is performed before completion of the transporting of the transport unit (51) to the corresponding picking zone.

15. The method according to any one of claims 12 to 14, wherein the time period between the transporting and the transferring is less than 2 seconds, preferably less than 1 second, further preferably less than 0.5 seconds, and most preferably less than 0.2 seconds.

## Revendications

1. Système de préparation de commandes, comprenant :
un entrepôt de stockage avec plusieurs rayonnages (10, 11, 12, 13, 14), respectivement agencés pour recevoir des unités de stockage (50), les rayonnages (10, 11, 12, 13, 14) incluant plusieurs plans verticaux ;
au moins un système de convoyage (30) qui est agencé dans une allée de rayonnages disposée entre les rayonnages (10, 11, 12, 13, 14),
**caractérisé en ce qu'**à chaque système de convoyage (30) est associée au moins une zone de préparation de commandes et chaque système de convoyage (30) est agencé pour acheminer des unités de stockage (50) d'un rayonnage adjacent (10, 11, 12, 13, 14) le long de l'allée de rayonnages jusqu'à la zone de préparation de commandes respective et retour, le système de convoyage (30) étant agencé pour l'acheminement horizontal d'unités de stockage (50) le long des plans, le système de convoyage (30) incluant plusieurs dispositifs de convoyage, chaque dispositif de convoyage étant disposé dans un plan et les dispositifs de convoyage étant agencés indépendamment les uns des autres pour l'acheminement horizontal d'unités de stockage (50) le long des plans respectifs jusqu'à la zone de préparation de commandes respective ;
un système de transport (40) agencé pour le transport d'unités de transport (51) vers et depuis chacune des zones de préparation de commandes ; et
au moins un manipulateur (20), de préférence un robot multiaxe à bras articulé, le manipulateur (20) étant agencé pour prélever un article dans l'unité de stockage (50) dans une des zones de préparation de commandes et pour transférer l'article vers une unité de transport (51) dans la même zone de préparation de commandes, le manipulateur (20) étant agencé pour prélever des articles dans des unités de stockage (50) dans différentes positions verticales dans la zone de préparation de commandes.

2. Système selon la revendication 1, dans lequel le manipulateur (20) est agencé de manière mobile le long d'un axe vertical (21), le système incluant de préférence un axe linéaire qui est agencé pour le déplacement du manipulateur (20) le long de l'axe vertical (21).

3. Système selon la revendication 2, dans lequel l'axe vertical (21) s'étend le long de la hauteur de rayonnages.

4. Système selon la revendication 2 ou 3, comprenant en outre un chariot (22, 23) sur lequel le manipulateur (20) est fixé, le chariot (22, 23) étant agencé pour tenir temporairement une unité de transport (51).

5. Système selon une des revendications 1 à 4, dans lequel l'unité de transport (51) est déplaçable verticalement dans la zone de préparation de commandes, de préférence conjointement avec le manipulateur (20).

6. Système selon une des revendications 1 à 5, dans lequel chaque dispositif de convoyage inclut un convoyeur à bande respectif.

7. Système selon une des revendications 1 à 6, dans lequel il est prévu sur chaque plan, dans la zone de préparation de commandes, une position de prélèvement (31) agencée pour recevoir une unité de stockage (50), le système de convoyage étant agencé pour le positionnement d'une unité de stockage (50) dans une des positions de prélèvement (31).

8. Système selon une des revendications 1 à 7, dans lequel les zones de préparation de commandes sont disposées sur les côtés frontaux des rayonnages (10, 11, 12, 13, 14).

9. Système selon une des revendications 1 à 8, dans lequel il est prévu un manipulateur (20) sur chaque côté frontal des rayonnages (10, 11, 12, 13, 14), et/ou dans lequel au moins un manipulateur (20) est associé à chaque zone de préparation de commandes.

10. Système selon une des revendications 1 à 9, dans lequel deux systèmes de convoyage (30) d'allées de rayonnages voisines respectifs sont associés à une zone de préparation de commandes commune.

11. Système selon une des revendications 1 à 10, dans lequel le système de transport (40) inclut un dispositif de transport avec de préférence une bande transporteuse, le dispositif de transport reliant plusieurs zones de préparation de commandes, et dans lequel le système de transport (40) est de préférence agencé pour évacuer une unité de transport (51) vers les zones de préparation de commandes.

12. Procédé de préparation de commandes d'articles à partir d'unités de stockage (50) d'un entrepôt de stockage au moyen d'un système de préparation de commandes selon une des revendications 1 à 11, comprenant les étapes suivantes :
acheminement, au moyen du système de convoyage (30), d'une unité de stockage (50) depuis un des rayonnages (10, 11, 12, 13, 14) jusqu'à une zone de préparation de commandes respective ;
transport, au moyen du système de transport (40), d'une unité de transport (51) jusqu'à la zone de préparation de commandes ;
prélèvement, au moyen du manipulateur (20), d'un article dans l'unité de stockage (50) ;
transfert, au moyen du manipulateur (20), de l'article prélevé jusqu'à l'unité de transport (51).

13. Procédé selon la revendication 12 en combinaison avec la revendication 2, dans lequel l'acheminement de l'unité de stockage (50) au moyen du système de convoyage (30) est un acheminement horizontal, et le procédé comporte en outre, avant et/ou après le prélèvement de l'article :
un déplacement vertical du manipulateur (20), le déplacement vertical du manipulateur (20) s'effectuant de préférence conjointement avec un déplacement vertical de l'unité de transport (51) dans la zone de préparation de commandes, le transfert de l'article vers l'unité de transport (50) s'effectuant de préférence pendant le déplacement vertical du manipulateur (20).

14. Procédé selon la revendication 12 ou 13, dans lequel le prélèvement de l'article s'effectue avant l'achèvement du transport de l'unité de transport (51) jusqu'à la zone de préparation de commandes correspondante.

15. Procédé selon une des revendications 12 à 14, dans lequel le laps de temps entre le transport et le transfert est inférieur à 2 secondes, de préférence inférieur à 1 seconde, plus préférentiellement inférieur à 0,5 seconde et le plus préférentiellement inférieur à 0,2 seconde.
